# EUROPÄISCHE PATENTANMELDUNG

(11) **EP 2 011 746 A2**
(43) Veröffentlichungstag der Anmeldung: **07.01.2009**
(21) Anmeldenummer: 08011991.0
(22) Anmeldetag: 03.07.2008
(51) Int. Cl.: B65F 1/12, B65D 19/06, B65F 1/14

(54) **Altstoffsammelbehälter und Entleervorrichtung hierfür**

(30) Priorität: 03.07.2007 AT 10192007
(71) Anmelder: System Entsorgung Gmbh, 4694 Ohlsdorf (AT)
(72) Erfinder: Huber, Erwin, 4694 Ohlsdorf (AT)
(74) Vertreter: Secklehner, Günter

(57) **Zusammenfassung**

Die Erfindung betrifft einen Altstoffsammelbehälter (1) mit einem Behälterboden (2), einem faltbaren Behältermantel (8) und einem Behälterdeckel (22), die einen Behälterinnenraum (21) definieren, wobei der Behältermantel (8) trennbar mit Behälterboden (2) und dem Behälterdeckel (22) verbunden und über jeweils zumindest eine Verriegelungseinrichtung (11,29) verriegelbar ist. Zumindest die Verriegelungseinrichtung (11) zur Verriegelung des Behälterbodens (2) mit dem Behältermantel (8) weist ein Sicherungselement (19) auf, das ausschließlich im Behälterinnenraum (21) betätigbar ist. Der Behälterdeckel (22) ist mit dem Behältermantel (8) mit einer Sperrvorrichtung (42) versperrbar ausgebildet.

## Beschreibung

Die Erfindung betrifft einen Altstoffsammelbehälter mit einem Behälterboden, einem faltbaren Behältermantel und einem Behälterdeckel, die einen Behälterinnenraum definieren, wobei der Behältermantel trennbar mit dem Behälterboden und dem Behälterdeckel verbunden und über jeweils zumindest eine Verriegelungseinrichtung verriegelbar ist sowie eine Entleervorrichtung für einen derartigen Altstoffsammelbehälter.

Faltbare Großvolumenbehälter sind bereits aus dem Stand der Technik bekannt. Diese bestehen aus drei Grundkomponenten, nämlich einer Grundpalette, einem faltbaren Schutzring, sowie eine Abschlussdecke. Die Grundpalette kann einen flachen Boden oder Kufen für Rollenbänder sowie alternativ Stahlverstrebungen für Hochregale aufweisen. Der Schutzring wird in einer Verschlussrille im Palettenteil und Deckel eingespannt und mit Hilfe von Verschlussriegeln arretiert. Eine Verschlussverriegelung ist auch am Deckenelement vorgesehen, sodass der Ring sowohl am Paletten- als auch am Deckelteil gesichert ist und eine zusätzliche Umreifung nicht notwendig ist. Es wird damit eine schnelle Aufstellung und Faltung des Behälters ermöglicht.

Diese Behälter, die ausschließlich für den Transport von Gütern gedacht sind, sollen herkömmliche Gitterboxen ablösen. Insbesondere durch die Faltbarkeit ist es möglich, leere Behälter auf kleinstem Raum zu transportieren, sodass nicht unnötig Ladevolumen verloren geht.

Aufgabe vorliegender Erfindung ist es, einen derartigen Behälter so weiterzubilden, um diesen auch für in Hinblick auf die Datensicherheit problematische Schüttgüter, wie z.B. Papier, welches der Aktenvernichtung zugeführt werden muss, verwenden zu können, wobei es eine Teilaufgabe der Erfindung ist, einen derartigen Altstoffsammelbehälter einfach entleerbar auszubilden und hierfür eine entsprechende Entleervorrichtung anzugeben.

Diese Aufgabe der Erfindung wird durch einen Altstoffsammelbehälter gelöst, bei dem zumindest die Verriegelungseinrichtung zur Verriegelung des Behälterbodens mit dem Behältermantel ein Sicherungselement aufweist, dass ausschließlich im Behälterinnenraum betätigbar ist und bei dem der Behälterdeckel mit dem Behältermantel versperrbar ausgebildet ist. Durch die ausschließliche Betätigbarkeit der Verriegelungsvorrichtung im Inneren des Altstoffsammelbehälters wird ein nicht autorisierter Eingriff in den Altstoffsammelbehälter durch Zerlegen desselben in seine Einzelteile verhindert. Es wird damit möglich, diesen Altstoffsammelbehälter insbesondere für Datenträger, wie z.B. Altpapier, bspw. aus dem Büroalltag, welches der Aktenvernichtung zugeführt werden muss, aber auch für andere Datenträger, wie z.B. Disketten, Magnetbänder oder dgl., zu verwenden. Generell kann dieser Altstoffsammelbehälter aber für Schüttgut allgemein verwendet werden, wie z.B. auch für Bierkapseln. Von Vorteil bei der erfindungsgemäßen Ausgestaltung ist weiters, dass die bereits bekannten Sammelbehälter aus dem Stand dem Technik durch entsprechende Adaptierung, d.h. die Anbringung des Sicherungselementes, nachgerüstet werden kann, sodass eine vollkommene Neuentwicklung und damit verbundene Geldmittelbereitstellung hierfür vermieden wird. Insbesondere betrifft dies auch die entsprechenden Formen für die Herstellung der Grundbestandteile des Altstoffsammelbehälters, wenn diese aus Kunststoff bestehen.

Es sei in diesem Zusammenhang angemerkt, dass der Verhinderung des Eingriffes Grenzen gesetzt sind, da der Altstoffsammelbehälter nicht mit einem Tresor gleichzusetzen ist und je nach Wahl des Werkstoffes für die Bestandteile des Altstoffsammelbehälters mit Brechwerkzeugen bzw. Gewalt dieser geöffnet werden kann. Verhindert werden kann mit der Erfindung jedoch, dass das Öffnen des Behälters sehr rasch und ohne Werkzeug erfolgen kann, sodass die Hemmschwelle für das unbefugte Öffnen des Behälters gegenüber unverriegelten bzw. unversperrten Altstoffsammelbehälter deutlich größer ist.

Gemäß einer Weiterbildung der Erfindung ist vorgesehen, dass eine Verriegelungseinrichtung für die Verriegelung eines Behälterbodens mit dem Behältermantel durch einen horizontal verschiebbaren Riegel gebildet ist, der in der verriegelten Stellung in eine dazu korrespondierende Ausnehmung in einer Seitenwand des Behältermantels eingreift, wobei der Riegel eine, insbesondere durchgehende, Ausnehmung aufweist und das zugehörige Sicherungselement durch ein Gestänge gebildet ist, dass in der Sicherungsstellung in die Ausnehmung eingreift bzw. durch diese hindurchragt. Es ist damit möglich, zuerst die Seitenwand mit dem Behälterboden zu verriegeln, sodass bereits eine gewisse Stabilität des Altstoffsammelbehälters in diesem Stadium des Zusammenbaus vorhanden ist und das Sicherungselement, d.h. das Gestänge, einfach in die Ausnehmung des Riegels eingeführt werden kann. Diese Stabilität des Behälters ist aber auch dann von Vorteil, wenn dieser bereits voll ist und der Entleerung zugeführt wird, da im Rahmen der Erfindung vorgesehen ist, dass das Schüttgut, insbesondere das Altpapier, über den Behälterboden entleert wird, wozu vorab das Sicherungselement entfernt werden muss. Es wird also durch das Entfernen des Sicherungselementes, d.h. des Gestänges, die Stabilität des Behälters nicht bzw. kaum beeinflusst, sodass dieser auch im entsicherten Zustand problemlos mit einem Gabelstapler hochgehoben werden kann.

Während bei vorhergehender Ausführungsvariante bei einem Altstoffsammelbehälter mit polygonalem Querschnitt zumindest zwei Verriegelungseinrichtungen vorgesehen sind, besteht im Rahmen der Erfindung auch die Möglichkeit, dass der Riegel zumindest solange ist, dass er durch zwei einander gegenüberliegende Ausnehmungen in zwei Seitenwänden des Behältermantels hindurchragt und dieser Riegel zwei Ausnehmungen aufweist, wodurch dieser Riegel im Zusammenspiel mit dem Gestänge dem Behälter auch eine höhere Quersteifigkeit verleihen kann. Zudem wird dadurch erreicht, dass dieser Riegel einfach von außen durch den Behälter hindurch gesteckt werden kann, wohingegen bei vorangehender Ausführungsvariante üblicherweise vorgesehen ist, dass diese Riegel, wie dies noch näher beschrieben wird, von innen nach außen verschoben werden, sodass man entweder in den Behälter selbst oder, sofern der Behälterboden in Art einer Europalette bzw. einer Palette mit genormter Stellfläche ausgebildet ist, in die Zwischenräume unterhalb des Bodens hineingreifen muss, um den Riegel zu betätigen.

Zur Erhöhung der Stabilität des Altstoffsammelbehälters kann vorgesehen werden, dass für die Verriegelung des Behälterbodens mit dem Behältermantel je eine Verriegelungsvornchtung zumindest für zwei gegenüberliegende Seitenwände des Behältermantels angeordnet sind. Insbesondere bei längeren Seitenwänden ist es dabei von Vorteil, wenn zumindest zwei Verriegelungsvorrichtungen für diese Seitenwände vorgesehen werden.

Bei diesen Ausführungsvarianten ist von Vorteil, wenn die beiden Verriegelungsvorrichtungen schräg versetzt zueinander angeordnet sind, da damit eine höhere Abhebsicherheit des Behältermantels vom Behälterboden erreicht wird.

Zur Sicherung des bzw. der Gestänge im Behälterinnenraum, insbesondere um auch zu vermeiden, dass bei längeren Gestängen diese durch das Einwerfen des Schüttgutes verbogen werden, ist es möglich, dass das bzw. die Gestänge mit den jeweilig zugehörigen Seitenwänden des Behältermantels über eine Verbindungseinrichtung verbindbar sind.

Diese Verbindungseinrichtung kann durch einen Klettverschluss gebildet sein, sodass eine rasche Montage bzw. Demontage des Gestänges erreicht werden kann.

Es ist weiters möglich, dass an dem bzw. an den Gestänge (n) im Bereich des Eingriffs mit dem (den) Riegel(n) je zumindest ein Begrenzungselement angeordnet ist, dass die vertikale Verschiebbarkeit des Gestänges bzw. der Gestänge begrenzt, sodass dieses bzw. diese in einer bestimmten Höhe und beabstandet zur Aufstandsfläche des Behälterbodens gehaltert wird, um damit bei der Ausführungsvariante des Behälterbodens für den Eingriff von Transportmittel, wie z.B. Hubwägen oder Gabelstapler, das Gestänge bzw. die Gestänge die Handhabung des Altstoffsammelbehälters während des Transportes nicht negativ beeinflusst bzw. beeinflussen. Es wird damit aber auch zusätzlich erreicht, dass das Gestänge nicht nach unten aus dem Behälterinnenraum herausgezogen werden kann.

Bevorzugt weist das oder weisen die Gestänge einen Länge in vertikaler Richtung auf, die zumindest annähernd so groß wie die Höhe des Behältermantels in diese Richtung, wodurch nicht nur die Einführbarkeit des Gestänges erleichtert ist, sondern das Gestänge auch bei vollem Behälter aus diesem herausgezogen werden kann, was insbesondere von Vorteil ist, wenn der Altstoffsammelbehälter mit der erfindungsgemäßen Entleervorrichtung entleert wird.

Es ist aber auch möglich, dass das Gestänge bzw. die Gestänge am Behälter angeordnet ist bzw. sind und so mit diesem eine Einheit bilden, sodass durch das Einführen des Gestänges in den Behälterinnenraum auch gleichzeitig der Behälterdeckel arretiert wird. Insbesondere ist dies von Vorteil wenn der Behälterdeckel zumindest zweiteilig ausgeführt ist, wodurch der Behälterinnenraum z.B. durch Verschwenken eines Teils des Behälterdeckels nach wie vor zugänglich ist. Insbesondere wenn das Gestänge mit dem Behälterdeckel fest verbindbar ist bzw. mit diesem verbunden ist, kann auf zusätzliche Verriegelungseinrichtungen im Bereich des Behälterdeckels unter Umständen verzichtet werden, sofern diese nicht ohnehin aus Stabilitätsgründen angeordnet werden.

Es ist dabei von Vorteil, wenn das Gestänge verschwenkbar am Behälterdeckel angeordnet ist, um den Transport des zusammengefalteten, leeren Altstoffsammelbehälters zu vereinfachen. Aus demselben Grund ist es von Vorteil, wenn das Gestänge faltbar ausgebildet ist, wodurch der Platzbedarf für den Behälterdeckel mit dem Gestänge reduziert werden kann. Diese Ausführungsvariante ist insbesondere auch dann von Vorteil, wenn der Altstoffsammelbehälter eine relativ große Höhe bei gleichzeitig kleinem Querschnitt - in vertikaler Richtung betrachtet - aufweist.

Die Verriegelungseinrichtung für die Verriegelung des Behälterdeckels mit dem Behältermantel kann durch einen ersten horizontal verschiebbaren Riegel gebildet sein, der in der verriegelten Stellung in eine dazu korrespondierende Ausnehmung in einer der Seitenwände des Behältermantels eingreift, und das Sicherungselement hierfür kann durch einen zweiten horizontal verschiebbaren, am ersten Riegel angeordneten Riegel sowie durch eine Riegelfalle mit einer Ausnehmung gebildet sein, in der der zweite Riegel in der Verriegelungsstellung eingreift. Hierdurch kann erreicht werden, dass der eingangs, aus dem Stand der Technik bekannte Altstoffsammelbehälter durch einfache Adaptierung weiter verwendet werden kann, wobei nicht auf eine bestimmte Anordnung des Behälterdeckels hinsichtlich seiner relativen Lage zum Behältermantel geachtet werden muss, da der zweite Riegel unmittelbar am ersten Riegel angeordnet werden kann und somit der Behälterdeckel auch um 180° in horizontaler Ebene gedreht aufgesetzt und mit dem Behältermantel gesichert verriegelt werden kann. Diese einfache Adaptierung ermöglicht zudem, wie dies bereits zur Verriegelung des Behälterbodens mit dem Behältermantel ausgeführt wurde, dass bereits bestehende Formen für die Herstellung von Kunststoffbehälterdeckel weiter verwendet werden können, somit also Kosten für die Aufwertung des Behälters aus dem Stand der Technik eingespart werden können. Darüber hinaus ist durch diese Doppelverriegelung mit zwei Riegeln eine einfache Handhabung dieses Sicherungsmechanismus möglich.

Die Riegelfalle kann dabei durch ein zumindest annähernd T-förmiges Profilstück gebildet sein, dass in eine Ausnehmung des Behälterdeckels und diese teilweise durchdringend einsteckbar ist, wodurch wiederum die Bedienung dieses Sicherungsmechanismus vereinfacht werden kann. Zudem ist sofort ersichtlich bzw. auf einfache Weise nachprüfbar, auch bei an der Behälterdeckelunterseite angeordneten Riegeln, ob der Sicherungsmechanismus aktiviert ist.

Es ist aber auch möglich, in einer Ausführungsvariante hierzu, dass die Riegelfalle an einer inneren, auf den Behälterinnenraum weisenden Oberfläche des Behälterdeckels angeformt ist, womit eine höhere Sicherheit in Hinblick auf ein unbefugtes Öffnen des Behälters erreicht werden kann.

Vorzugsweise ist der Behälterdeckel zumindest zweigeteilt ausgeführt, wobei die beiden Teile verschwenkbar miteinander verbunden sind. Es ist damit möglich, den einen Behälterteil gesichert gegen unbefugtes Öffnen mit dem Behältermantel zu verriegeln, wobei der Behälterinnenraum aber für die Befüllung noch einfach zugänglich bleibt. Zudem kann damit erreicht werden, insbesondere bei sehr großvolumigen Altstoffsammelbehältern, dass nicht der gesamte Behälterdeckel für die Befüllung geöffnet werden muss, wodurch die Bedienerfreundlichkeit wächst.

Die Sperrvorrichtung für die Versperrung des Behälterdeckels mit dem Behältermantel ist bevorzugt durch ein Zylinderschloss mit einem Drehriegel oder einem Schieberiegel gebildet, der an einem Ende des Zylinderschlosses angeordnet ist, welches in Richtung auf den Behälterinnenraum weist, wobei der Dreh- oder Schieberiegel mit einer Ausnehmung in eine der Seitenwände des Behältermantels zusammenwirkt. Es wird damit erreicht, dass nicht nur auf sehr sichere Sperrvorrichtungen - bekanntlich weisen Zylinderschlösser zum Teil eine schon sehr hohe Einbruchsicherheit auf - zurückgegriffen werden kann, sondern wird es aufgrund des Riegels möglich, gegebenenfalls die für die Verriegelung an sich vorgesehenen Ausnehmungen im Behältermantel auch für das Versperren des Behälterdeckels mit dem Behältermantels so verwenden.

Für die Faltung, d.h. das Zusammenlegen des Behältermantels in den gefalteten Zustand, können zumindest zwei Seitenwände des Behältermantels Rilllinien aufweisen, wobei diese bevorzugt außermittig im Bezug auf die jeweilige Seitenwand angeordnet sind. Es wird damit, insbesondere für großvolumige Altstoffsammelbehälter eine höhere Seitensteifigkeit erreicht, sodass die Ausbauchung des Behältermantels, bspw. wenn dieser aus einem Kunststoff gefertigt ist, um das Eigengewicht des Altstoffsammelbehälters zu reduzieren, verringert werden kann.

Schließlich ist es möglich, dass der Behälterboden und/oder der Behälterdeckel Seitenwände aufweisen, die - in vertikaler Richtung betrachtet - die Ausnehmungen in den Seitenwänden des Behältermantels für die Riegel der Verriegelungseinrichtung bzw. der Sperrvorrichtung überdecken. Es wird damit eine zusätzliche Sicherheit gegen das Aufzwängen dieser Riegel erreicht, in dem der Zugang bzw. Eingriff von Werkzeugen zu diesen Riegeln bzw. in diese Ausnehmungen erschwert wird.

Die Aufgabe der Erfindung wird aber auch durch die eingangs genannte Entleervorrichtung gelöst, die zumindest einen Boden, der eine Aufstandsfläche für den Altstoffsammelbehälter bildet, zumindest eine mit dem Boden verbundene, insbesondere höhenverstellbare, Vertikalstrebe und zumindest eine mit der Vertikalstrebe verbundene Querstrebe aufweist, wobei an der Querstrebe zumindest eine erste Halteeinrichtung angeordnet ist, die mit einer Seitenwand des Behältermantels oder dem Behälterdeckel des Altstoffsammelbehälters verbindbar ist, und bei der an dem Boden oder der Vertikalstrebe zumindest eine zweite Haltevorrichtung angeordnet ist, die mit dem Behälterboden und/oder einer der ersten Seitewand gegenüberliegenden Seitenwand des Behältermantels verbindbar ist. Von Vorteil ist dabei, dass diese Entleervorrichtung relativ einfach aufgebaut ist, somit also einfach zu bedienen ist, sodass der Altstoffsammelbehälter in relativ kurzer Zeit entleert werden kann, wobei der Altstoffsammelbehälter nicht über Kopf gekippt werden muss, sondern die Entleerung über den Behälterboden möglich ist. Es wird damit möglich, diesen Behälter schüttgutfähig auszugestalten bzw. die Schüttgutfähigkeit zu verbessern.

Die erste Halteeinrichtung weist zumindest einen Saugnapf, insbesondere zwei Saugnäpfe, auf, wodurch diese an dem Altstoffsammelbehälter nicht an einer fixen Position angebracht werden muss, sondern der Ort der Anbringung variiert werden kann, wodurch wiederum die Bedienerfreundlichkeit erhöht ist.

Die zweite Halteeinrichtung kann zumindest eine breitenverstellbare Zwinge, bevorzugt zwei Zwingen, aufweisen, wodurch ebenfalls der Vorteil erreicht wird, dass keine ortsgebundene Positionierung dieser Halteeinrichtung erforderlich ist.

Durch die Ausbildungen dieser beiden Halteeinrichtungen wird zudem erreicht, dass keine besonderen Einbauten oder Einrichtungen am Altstoffsammelbehälter selbst angebracht werden müssen. Dies hat insbesondere wieder den Vorteil, dass keine weitere Adaptierung des eingangs genannten, aus dem Stand der Technik bekannten Altstoffsammelbehälters erforderlich ist.

Weiters kann der Boden durch zwei Formträger, insbesondere mit C-förmigen Profilquerschnitt, gebildet sein, wobei diese beiden Formträgern gemäß einer weiteren Ausführungsvariante auf Gabeln eines Gabelstaplers oder eines Hubwagens aufgeschoben werden können und somit ein einfacher Transport des Altstoffsammelbehälters mit der Entleervorrichtung bspw. zu einem LKW oder einem größeren Sammelbehälter oder dgl. möglich ist.

Zum besseren Verständnis wird die Erfindung anhand der nachfolgenden Figuren näher erläutert.

Es zeigen jeweils in schematisch vereinfachter Darstellung:
- Fig. 1: einen Behälterboden in Schrägansicht von oben
- Fig. 2: einen Behälterboden in Schrägansicht von unten
- Fig. 3: eine Verriegelungseinrichtung zur Verriegelung des Behälterbodens mit dem Behältermantel in Schrägansicht;
- Fig. 4: einen Behältermantel in Schrägansicht;
- Fig. 5: die Verriegelungsstellung einer Verriegelungseinrichtung des Behälterbodens;
- Fig. 6: einen Behälterdeckel in Draufsicht von unten
- Fig. 7: einen Behälterdeckel in Schrägansicht von oben;
- Fig. 8: eine Verriegelungseinrichtung des Behälterdeckels;
- Fig. 9: eine Sperrvorrichtung des Behälterdeckels
- Fig. 10: einen zweigeteilten Behälterdeckel auf einem Behältermantel
- Fig. 11: ein Sicherungselement für die Verriegelungseinrichtung des Behälterdeckels
- Fig. 12: eine Entleervorrichtung mit einem Altstoffsammelbehälter in Schrägansicht;
- Fig. 13: die Entleerung eines Altstoffsammelbehälters mit einer Entleerungsvorrichtung

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese bei einer Lageänderung sinngemäß auf die neue Lage zu übertragen. Weiters können auch Einzelmerkmale oder Merkmalskombinationen aus den gezeigten und beschriebenen, unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

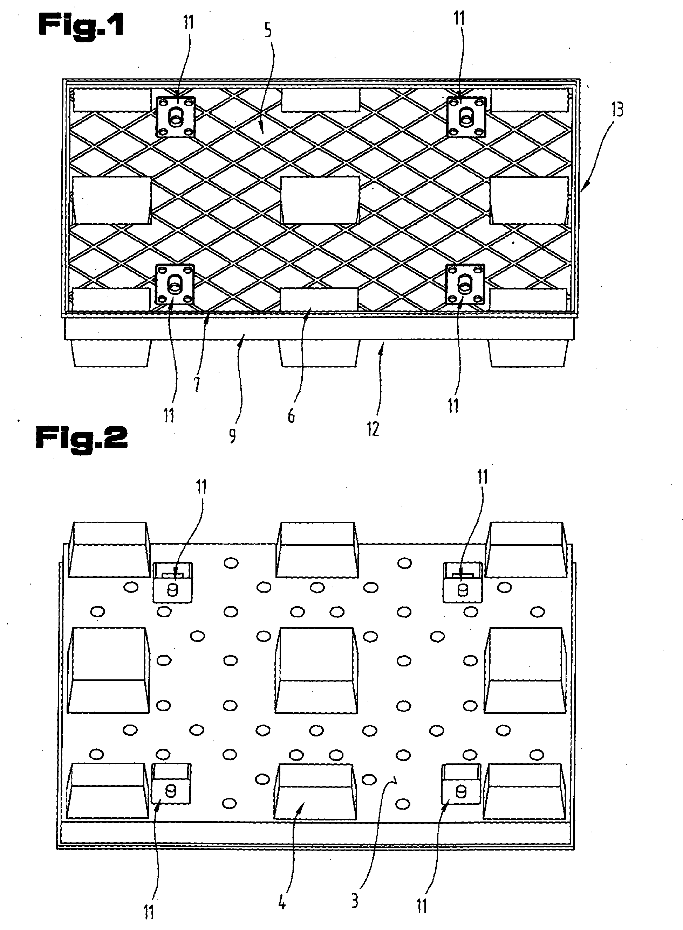

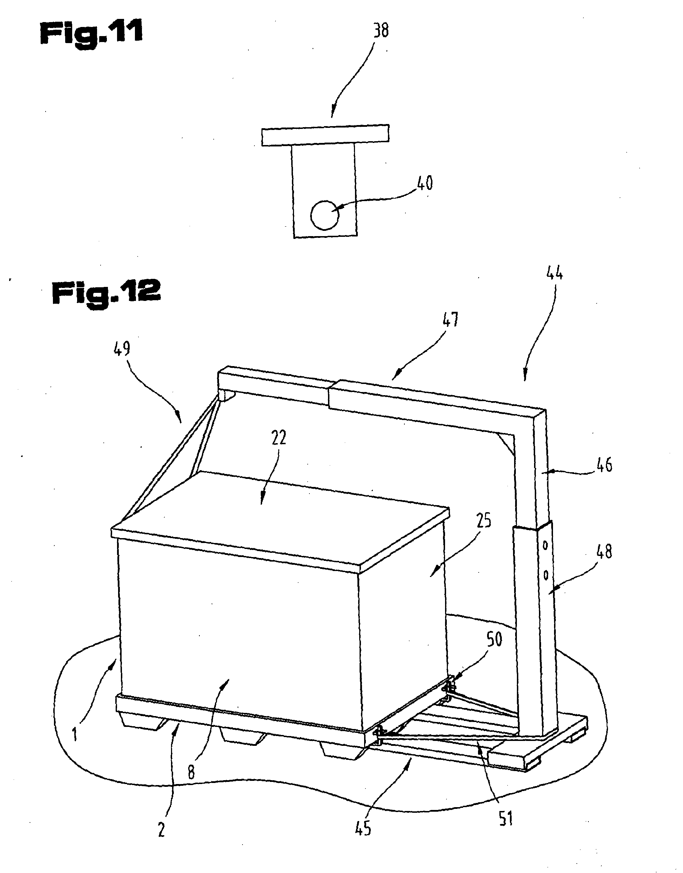

Die Fig. 1 bis 11 zeigen Bestandteile eines Altstoffsammelbehälters 1, wie er bspw. in Fig. 12 dargestellt ist. Dieser Altstoffsammelbehälter 1 kann aus jedem beliebigen, hierfür geeigneten Werkstoff bestehen, wie z.B. aus Metall, insbesondere aus Aluminium, vorzugsweise besteht dieser Altstoffsammelbehälter 1 jedoch aus Kunststoff, insbesondere aus HDPE, d.h., dessen Hauptbestandteile nämlich der Boden, der Mantel sowie der Deckel.

Des Weiteren ist es möglich, dass der Boden und/oder der Deckel und/oder der Mantel doppelwandig mit Verbindungsstegen zwischen den beiden Wänden ausgeführt ist bzw. sind, bspw. in Art einer Wellpappe, wodurch dieser Altstoffsammelbehälter 1 eine höhere Stabilität bei gleichzeitig geringem Eigengewicht erhält.

Der Altstoffsammelbehälter 1 kann jeden beliebigen Querschnitt - in horizontaler Richtung betrachtet - aufweisen, wie z.B. quadratisch, rechteckig, fünf-, sechs-, achteckig, etc. Bevorzugt hat der Querschnitt des Altstoffsammelbehälters 1 jedoch die Abmessungen einer Europalette, um damit den Transport, d.h. die Beladung eines LKW aufgrund der Standardisierung zur bestmöglichen Ausnutzung des Ladevolumens zu vereinfachen.

Die Fig. 1 und 2 zeigen eine Ausführungsvariante eines Behälterbodens 2 in der Ansicht von oben bzw. unten. Wie insbesondere aus Fig. 2 ersichtlich ist, können an dem Behälterboden 2 an einer Unterseite 3 Vorsprünge 4 vorgesehen sein, um damit den Eingriff eines Transportmittels, wie z.B. eines Gabelstapels oder eines Hubwagens, zu ermöglichen. Nachdem dieser Behälterboden 2 als Tiefziehbauteil aus Kunststoff ausgebildet sein kann, können diese Vorsprünge an einer Oberseite 5 als Vertiefungen 6 ausgebildet sein. Insbesondere können bei dieser Ausführungsvariante des Behälterbodens 2 neun derartige Vorsprünge 4 vorgesehen sein, wie dies auch sinngemäß bei Europaletten bekannt ist.

Des Weiteren kann die Oberseite 5 des Behälterbodens 2 weitere Versteifungen aufweisen, ebenso wie die Unterseite 3. Da derartige Versteifungen für Kunststoffbauteile an sich bekannt sind, ist es nicht erforderlich, diese näher auszuführen. Bspw. könnte an der Oberseite 5 eine Art Rautenmuster mit Vertiefungen ausgebildet sein.

Anstelle dieser Vorsprünge 4 können bspw. Kufen oder sich über die Gesamtlänge des Behälterbodens 2 erstreckende stegförmige Vorsprünge 4 ausgebildet sein. Selbstverständlich sind andere Ausgestaltungen zur Unterfahrbarkeit des Behälterbodens 2 für einen Gabelstapler möglich.

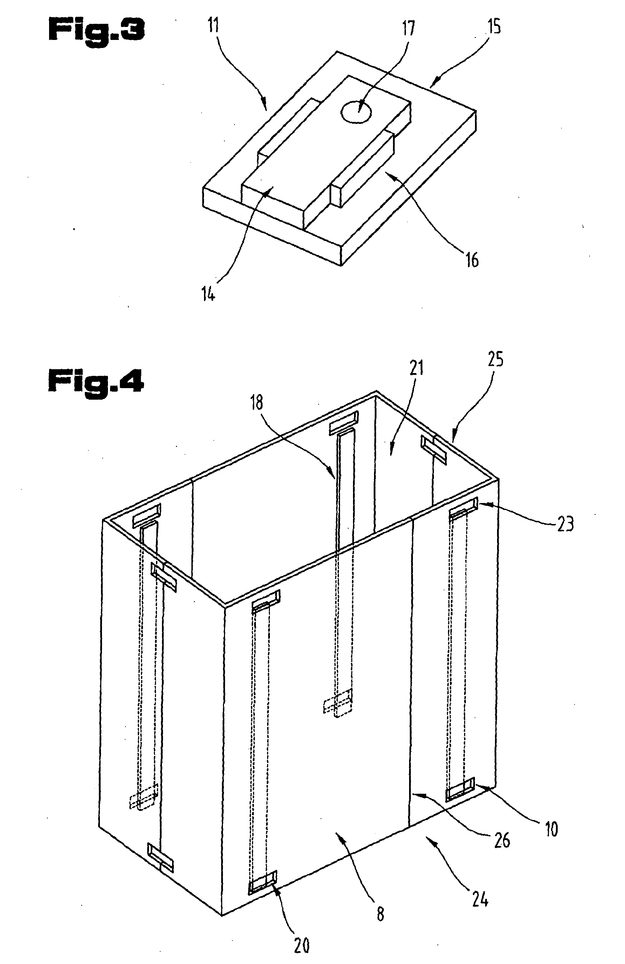

Wie insbesondere aus Fig. 1 ersichtlich ist, weist dieser Behälterboden 2 bevorzugt eine umlaufende nutartige Rille 7 auf, die im Bereich des äußeren Umfanges angeordnet ist. Diese nutartige Rille 7 wird insbesondere dazu verwendet, um darin einen Behältermantel 8, wie er in Fig. 4 dargestellt ist, einzuspannen. Mit dieser umlaufenden Rille 7 wird zudem erreicht, dass dieser Behälterboden 2 Seitenwände 9 aufweist, die Ausnehmungen 10 (Fig. 4) des Be-hältermantels 8 zumindest im Bereich der Verriegelung zwischen dem Behälterboden 2 und dem Behältermantel 8 in vertikaler Richtung abdeckt, wodurch ein erschwerter Zugang zur Verriegelung erreicht werden kann.

In einer Ausführungsvariante dazu, kann auf diese Seitenwand 9 bzw. diese Seitenwände 9 des Behälterbodens 2 verzichtet werden, sodass also der Behälterboden 2 im Bereich des Umfanges zumindest bereichsweise, vorzugsweise umlaufend, mit einer Absetzung in Art einer Lisene versehen ist, auf der sich der Behältermantel 8 abstützt.

Bei der dargestellten Ausführungsvariante des Altstoffsammelbehälters 1 ist der Behälterboden 2 mit vier Verriegelungseinrichtungen 11 versehen, die von der Unterseite 3 des Behälterbodens 2 betätigbar sind. Es können selbstverständlich auch mehr oder weniger als vier Verriegelungseinrichtungen 11 angeordnet werden, bspw. kann pro Längsseite 12 und pro Breitseite 13 jeweils eine Verriegelungseinrichtung 11 angeordnet werden, die auch jeweils zueinander in horizontaler Richtung schräg versetzt sein können, also nicht wie in Fig. 1 dargestellt, jeweils zwei Verriegelungseinrichtungen 11 einander gegenüberliegend angeordnet sind. Es können aber auch nur zwei der Verriegelungseinrichtungen 11 im Bereich der Längsseite 12, insbesondere wiederum schräg zueinander versetzt, angeordnet werden. Die Ausführungsvariante mit vier Verriegelungseinrichtungen 11 entsprechend den Fig. 1 und 2 hat sich jedoch in Hinblick auf die Stabilität des Altstoffsammelbehälters 1, nachdem dieser bevorzugt Ab-messungen einer Europalette aufweist - in horizontaler Richtung betrachtet - als die bevorzugte Ausführungsvariante herausgestellt. Insbesondere für andere Querschnittsformen des Behälterbodens 2 - in horizontaler Richtung betrachtet - kann eine andere Anzahl von Verriegelungseinrichtungen 11 jedoch vorteilhaft sein.

Eine Verriegelungseinrichtung 11 besteht im einfachsten Fall, wie diese in Fig. 3 dargestellt ist, aus einem horizontal verschiebbaren Riegel 14 und einer Abdeckplatte 15, die den Riegel 14 von der Unterseite 3 abdeckt. Zur Führung des Riegels 14 können an dieser Abdeckplatte 15 zumindest bereichsweise Stege 16 angeordnet sein, wie dies in Fig. 3 dargestellt ist, die die horizontale, lineare Bewegung des Riegels 14 nicht behindern, jedoch ein seitliches Verkanten des Riegels 14 möglichst verhindern.

Bei einer doppelwandigen Ausführung des Behälterbodens 2 besteht weiters die Möglichkeit, dass auf diese Abdeckplatte 15 verzichtet wird und der Riegel 14 zwischen den beiden Wänden des Behälterbodens 2 angeordnet und insbesondere darin geführt wird.

Der Riegel 14 weist eine Ausnehmung 17 auf, die insbesondere als durchgehende Bohrung oder Ausnehmung 17 ausgeführt ist. Es ist damit möglich, einerseits den Riegel mit einem Finger in die Verriegelungsstellung zu verbringen und andererseits dient diese Ausnehmung 17 für den Eingriff eines Gestänges 18, welches in Fig. 4 dargestellt ist.

Im Behälterboden 2 ist im Bereich des Riegels 14 ein Langloch ausgebildet, sodass die Ausnehmung 17 im Riegel 14 über den gesamten Verschiebeweg des Riegels 14 zugänglich ist.

Das Gestänge 18 dient als Sicherungselement 19 für den Riegel 14, um zu verhindern, dass dieser aus seiner Verriegelungsstellung in die Offenstellung gebracht werden kann, wenn dies nicht erwünscht ist.

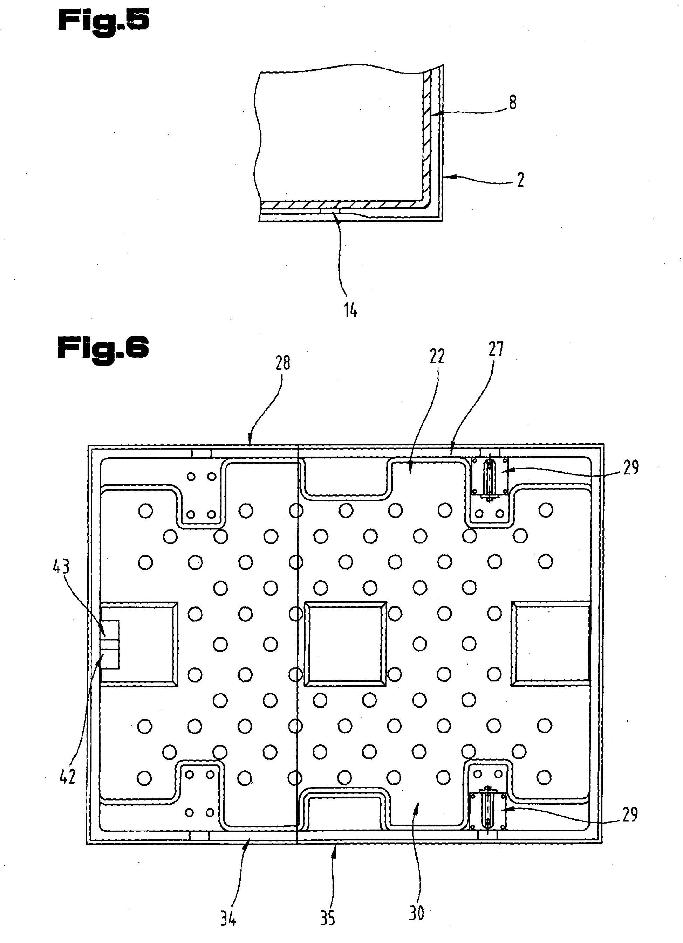

Zur Verriegelung des Behältermantels 8 mit dem Behälterboden 2 wird dieser Behältermantel 8, wie er z.B. in Fig. 4 dargestellt ist, in der Rille 7 angeordnet und danach der Riegel 14 aus seiner Offenstellung in seine Verriegelungsstellung durch horizontales Verschieben in Rich-tung auf die Seitenwände 9 des Behälterbodens 2 verriegelt. Um diese Verriegelung zu ermöglichen, weist der Behältermantel 8 durchgängige Ausnehmungen 20 an seinem Umfang im Bereich seiner Aufstandsfläche auf dem Behälterboden 2 auf. Der Riegel 14 wird durch eine Ausnehmung 20 geschoben, wie dies insbesondere aus dem Detail in Fig. 5 ersichtlich ist. In dieser Verriegelungsstellung wird danach von oben das Gestänge 18 in die Ausnehmung 17 des Riegels 14 eingeführt, wodurch dessen horizontale Verschiebbarkeit behindert wird. Dazu weist insbesondere auch der Behälterboden 2 eine entsprechende Ausnehmung bzw. durchgehende Öffnung auf, die der Aufnahme des unteren Teils des Gestänges 18 dient.

Bei einer doppelwandigen Ausführung des Behälterbodens 2 ist es unter Umständen ausrei-chend, wenn nur die dem Deckel des Altstoffsammelbehälters 1 zugewandte Wand mit dieser Ausnehmung 17 versehen ist. Der Riegel 14 kann diese Variante bspw. mit einem entsprechenden Vorsprung an der Unterseite betätigbar sein. Selbstverständlich ist dieser Vorsprung in Richtung auf die Aufstandsfläche des Behälterbodens 2 auch bei der Ausführungsvariante mit durchgehender Ausnehmung 17 im Riegel 14 und dem Behälterboden 2 möglich, um die Verschiebung, d. h. Verriegelung, insbesondere den Eingriff für den Benutzer des Altstoffsammelbehälters 1 unterhalb des Behälterbodens 2 zu erleichtern.

Der Riegel 14 kann insbesondere auch als durchgängiger Riegel 14 für zwei Ausnehmungen 17 in einander gegenüberliegenden Seitenwände des Behältermantels 8 vorgesehen sein, sodass dieser Riegel 14 von außen in dem Behältermantel 8 eingeführt werden kann, wobei dieser Riegel 14 zwei Ausnehmungen für den Eingriff der Gestänge 18 bzw. Sicherungselemente 19 aufweist.

Es ist damit auf eine Vereinfachung der Handhabung dieser Verriegelungseinrichtung 11 insofern möglich, als diese nicht von in Richtung der Unterseite 3 des Behälterbodens 2 bedient werden muss.

Obwohl bei der Ausführungsvariante des Altstoffsammelbehälters 1 vier Sicherungselemente 19 in Form des Gestänges 18 angeordnet sind, besteht selbstverständlich die Möglichkeit, dass wiederum weniger als vier Sicherungselemente 19 angeordnet werden, auch wenn vier Verriegelungseinrichtungen 11 vorhanden sind, bspw. zwei Sicherungselemente 19 schräg versetzt zueinander vorgesehen werden.

Des Weiteren besteht die Möglichkeit, dass das Gestänge 18 nicht wie in Fig. 4 dargestellt, zumindest annähernd eine Länge aufweist, die in etwa der Höhe des Behältermantels 8 entspricht, wobei diese Ausführungsvariante die bevorzugte ist, da damit die Verriegelung und Sicherung insofern vereinfacht werden kann als der Benutzer des Altstoffsammelbehälters 1 nicht in einen Behälterinnenraum 21 tief hineingreifen muss, sondern die Bedienung im Wesentlichen von der offenen Seite des Behältermantels 8 erfolgen kann. Es besteht also auch die Möglichkeit, dass das Sicherungselement 19 deutlich kürzer ist als die Höhe des Altstoffsammelbehälters 1, d.h. des Behältermantels 8. Auch Zwischenlösungen sind selbstverständlich möglich, bspw. kann sich das Gestänge 18 bis in etwa die Hälfte der Höhe des Behältermantels 8 erstrecken.

Es besteht weiters die Möglichkeit, das Gestänge 18 bei diesen Ausführungsvarianten insofern zu sichern, als an der inneren Oberfläche des Behältermantels 8 entsprechende Verbindungseinrichtungen zwischen dem Behältermantel 8 und dem Gestänge 18 vorgesehen werden, insbesondere bei Gestängen 18 die in etwa eine Länge aufweisen, die der Höhe des Behältermantels 8 zumindest annähernd entspricht. In der bevorzugten Ausführungsvariante wird diese Verbindungseinrichtung durch einen Klettverschluss gebildet, sodass also ein Teil dieses Klettverschlusses an dem Gestänge 18 und der weitere Teil an der inneren Oberfläche des Behältermantels 8, d. h. den entsprechenden Seitenwänden angebracht ist. Es wird damit verhindert, dass das Gestänge 18 durchgebogen wird und bspw. in die Mitte des Behälterinnenraums 21 ragt, wie dies insbesondere auch beim Einwerfen von Altstoffen, bspw. Altpapier, auftreten kann.

Anstelle des Klettverschlusses oder zusätzlich dazu, können an der inneren Oberfläche des Behältermantels 8, d. h. dessen Seitewände, entsprechende andere Verbindungseinrichtungen vorgesehen werden, bspw. kann das Gestänge 18 in Ösen, welche über die innere Oberfläche des Behältermantels 8 vorstehen, geführt sein. Auch Schraubverbindungen, etc. sind möglich, wobei diese Schraubverbindungen im Vergleich zu Ösen oder einer Klettverschlussverbindung einen zusätzlichen Montageaufwand verursachen.

Es besteht weiters die Möglichkeit, dass dieses Sicherungselement 19, d. h. das Gestänge 18, am Deckel des Behälters angeordnet, insbesondere mit diesem verbunden ist, sodass durch das Aufsetzen des Deckels auch die Sicherung des Riegels 14 gegen Entriegelung erreicht werden kann. In diesem Fall kann unter Umständen auf zusätzliche Verbindungseinrichtungen zwischen dem Sicherungselement 19 und dem Behältermantel 8 verzichtet werden. Bei dieser Ausführungsvariante erweist es sich von Vorteil, wenn der Deckel des Altstoffsammelbehälters 1 zweiteilig ausgebildet ist, wie dies weiter unten noch näher beschrieben wird.

Weiters kann es sich bei dieser Ausführungsvariante als vorteilhaft erweisen, wenn das Gestänge 18, das am Deckel des Behälters angeordnet ist, verschwenkbar und/oder zusammenfaltbar ausgebildet ist, insbesondere nachdem der Altstoffsammelbehälter beliebige Höhen aufweisen kann, wodurch der Transport der leeren Altstoffsammelbehälter 1 durch entsprechende Faltung und damit Verringerung des Transportvolumens hierfür vereinfacht werden kann bzw. bei gleichem Ladevolumen mehr leere Altstoffsammelbehälter transportiert werden können.

Es ist weiters möglich, dass das Gestänge 18 an seinem oberen, dem Behälterdeckel 22 zugewandten Ende hackenförmig ausgebildet ist, um dieses besser greifen zu können, insbesondere wenn der Altstoffsammelbehälter 1 befüllt ist, um dieses Gestänge 18 herauszuziehen.

Des Weiteren ist es möglich, dass das Gestänge 18 an seinem unteren dem Behälterboden 2 zugewandten Ende, d. h. in diesem Bereich tellerartige Elemente bzw. allgemein Begrenzungselemente aufweist, die die Vertikalverschiebbarkeit dieses Gestänges 18 begrenzen, wobei dies insbesondere dann von Vorteil ist, wenn die Ausnehmungen im Behälterboden 2 und im Riegel 14 für die Aufnahme des Gestänges 18 als durchgängige Ausnehmungen ausgebildet sind, da damit das Durchrutschen des Gestänges 18 verhindert werden kann, sollte sich die Verbindungsvorrichtung des Gestänges 18 mit der inneren Oberfläche des Behältermantels unbeabsichtigt lösen.

Anstelle von tellerartigen Elementen als Begrenzungselemente können diese beispielsweise auch stabförmig ausgebildet sein und mit dem Gestänge 18 ein Kreuz ausbilden. Auch andere Ausführungsformen des Begrenzungselementes sind möglich.

Wie Fig. 4 zeigt, weist der Behältermantel 8 im Bereich des offenen Endes, welches von einem Behälterdeckel 22 abgedeckt wird, ebenfalls Ausnehmungen 23 bzw. Durchbrüche auf, die - wie dies weiter unten noch ausgeführt wird - der Verriegelung zwischen dem Behältermantel 8 und dem Behälterdeckel 22 dienen. Diese Ausnehmungen 23 können dabei ebenso wie die Ausnehmungen 20 im Bereich der Unterseite des Behältermantels 8 ausgebildet sein, sodass der Behältermantel 8 auch im gestürzten Zustand verwendet werden kann. Des Weiteren können Ausnehmungen 23 sowohl an einer Längsseite 24 als auch einer Breitseite 25 des Behältermantels 8 angeordnet werden, bzw. sind auch andere Varianten möglich, bspw. lediglich die Ausbildung der Ausnehmungen 23 an der Längsseite 24.

Das Gestänge 18 kann bspw. als Flachmaterial oder Rundmaterial ausgeführt sein.

Wie weiters aus Fig. 4 ersichtlich ist, kann der Behältermantel 8, um dessen Faltung zu ermöglichen, Rilllinien 26 aufweisen, bspw. in Form Prägungen oder Rillungen, wie dies bspw. aus der Kartonagenfertigung bekannt ist. Obwohl diese Rilllinien 26 prinzipiell mittig und in vertikaler Richtung verlaufend in den Seitenwänden angeordnet sein können, ist es bevorzugt, wenn diese Rilllinien 26 außermittig angeordnet sind, wie dies in Fig. 4 dargestellt ist, da damit eine höhere Seitenstabilität des Behältermantels 8 erreicht wird und somit die Ausbauchung des vollen Altstoffsammelbehälters 1 reduziert werden kann. Zumindest sind zwei Rilllinien 26 bei dem Behältermantel 8 mit viereckigem Querschnitt angeordnet, insbesondere sind jedoch insgesamt vier Rilllinien 26 vorgesehen, also je eine Rilllinien 26 pro Längsseite 24 und pro Breitseite 25. Obwohl die Rilllinien 26 bei den Breitseiten 25 zentrisch dargestellt sind, besteht auch hier die Möglichkeit, dass diese ebenso wie die Rilllinien 26 in der Längsseite 24 azentrisch angeordnet werden.

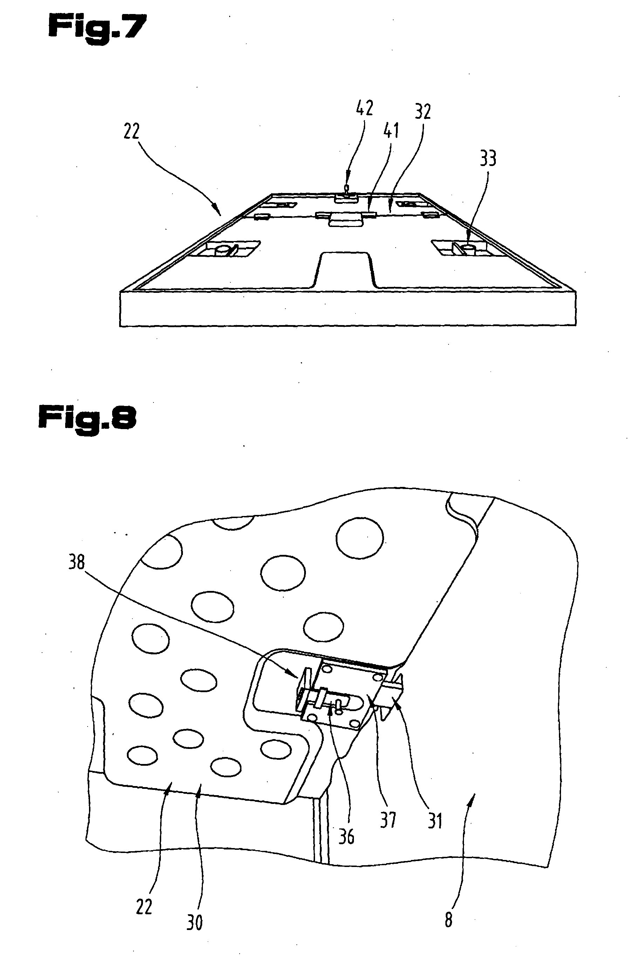

In den Fig. 6 und 7 ist der Behälterdeckel 22 in Ansicht von unten sowie in Draufsicht dargestellt. Prinzipiell kann der Behälter 22 ein einteiliger Formteil sein, bevorzugt wird jedoch eine Ausführungsvariante, bei der der Behälterdeckel 22 einen ersten Deckelteil 27 und einen zweiten Deckelteil 28 umfasst. Die Trennung zwischen den beiden Deckelteilen 27, 28 ist bevorzugt wiederum außermittig angeordnet, sodass diese beiden Behälterteile ungleich groß sind, insbesondere ist lediglich der kleinere Deckelteil 28 für das Aufschwenken vorgesehen ist.

Dieser Behälterdeckel 22 weist insbesondere zwei Verriegelungseinrichtungen 29 auf, die an einer Unterseite 30 des größeren Deckelteils 27 angeordnet sind. Diese Verriegelungseinrichtungen 29 sind insbesondere wieder als Schieberiegel mit einem Riegel 31 ausgebildet, wie dies insbesondere aus Fig. 8 ersichtlich ist, aus der diese Verriegelungseinrichtung 29 in der Verriegelstellung ersichtlich ist. Die Ausführung dieser Verriegelungseichrichtung 29 kann jener der Verriegelungseinrichtung 11 im Behälterboden 2 zumindest annähernd entsprechen, also bspw. wiederum neben dem Riegel 31 eine Abdeckplatte aufweisen oder bei einer doppelwandigen Ausführung des Behälterdeckels 22 zwischen den beiden Wandteilen angeordnet sein und entsprechende Führungsmittel aufweisen.

Weiters kann der Riegel 31 von einer Oberseite 32 des Behälterdeckels 22 bedienbar sein und dazu bspw. ein konusartigen Fortsatz 33 für den Eingriff der menschlichen Hand bzw. eines Fingers aufweisen bzw. können ähnlich wirkende Mittel an der Oberseite des Riegels 31 angeordnet sein, bspw. Stege oder dgl..

Des Weiteren kann die Anzahl der Riegel 31 von zwei unterschiedlich sein, bspw. kann der Behälterdeckel 22 auch vier oder sechs oder eine dazu unterschiedliche Anzahl an Riegel 31 aufweisen. Insbesondere sind die Riegel 31 im Zusammenhang mit den Ausnehmungen 23 so angeordnet, dass der Behälterdeckel 22 um 180° gedreht - in horizontaler Ebene - auf den Behältermantel 8 aufgesetzt werden kann, wodurch die Montage aufgrund dieser relativen Lageunabhängigkeit vereinfacht werden kann.

Des Weiteren kann der Behälterdeckel 22 ähnliche Versteifungen aufweisen, wie der Behälterboden 2, also bpsw. Prägungen, Vertiefungen, etc., um dem Behälterdeckel 22 eine größere Stabilität zu verleihen.

Wie weiters aus Fig. 6 ersichtlich ist, weist bevorzugt auch der Behälterdeckel 22 eine umlaufende Rille 34 im Bereich seines Umfanges auf, das obere Ende des Behältermantels 8 eingeführt werden kann, wodurch eine höhere Stabilität des Altstoffsammelbehälters 1 erreicht wird. Es ist aber hierbei auch wiederum die Ausführung mit der Absetzung in Art einer Lisene möglich, wie dies bereits zum Behälterboden 2 ausgeführt wurde.

Bevorzugt weist dieser Behälterdeckel 22 wiederum zumindest teilweise umlaufende Seitenwände 35 auf, die einerseits die Rille 34 zum Teil ausbilden und eine Höhe aufweisen, dass diese Seitenwände 35 zumindest den Eingriffsbereich des Riegels 31 in den Behältermantel 8, d.h. dessen Ausnehmungen 23, überdecken - von der Seite her gesehen - um den Eingriff in diesen Bereich zu erschweren und damit die Verriegelung besser sichern zu können.

Wie weiters insbesondere aus Fig. 8 ersichtlich ist, ist an der Unterseite des Riegels 31 bzw. in diesem Bereich an der Unterseite 30 des Behälterdeckels 22 ein zweiter Riegel 36 vorgesehen, bspw. in diesem Bereich mit einer Halteplatte 37 an der Unterseite 30 des Behälterdeckels montiert, sowie eine Riegelfalle 38, die mit dem Riegel 36 zusammenwirkt und ein Sicherungselement 39 für die Verriegelung des Behälterdeckels 22 mit dem Behältermantel 8 bildet.

Die Riegelfalle 38 wird bevorzugt durch ein T-Stück gebildet, wie dies aus Fig. 11 ersichtlich ist, wobei dieses T-Stück durch eine entsprechende Öffnung des Behälterdeckels 22 gesteckt wird, sodass eine Ausnehmung 40 im T-Stück mit dem Riegel 36 in Wirkverbindung gebracht werden kann, der Riegel 36 also durch diese Ausnehmung 40 hindurchgeführt wird. Die Platzierung der Ausnehmung im Behälterdeckel 22 für diese Riegelfalle 38 ist dabei so angeordnet, dass diese Riegelfalle 38 bei verriegelter Stellung des ersten Riegels 31 des Behälterdeckels 22 an einer Verschiebung in die Entriegelungsstellung gehindert wird, also diese Riegelfalle 38 in der verriegelten Stellung des Riegels 31 zumindest bereichsweise an diesem anliegt.

Der Riegel 36 wird in der Folge gegengleich zum Riegel 31 in die Verriegelungsstellung durch Horizontalverschiebung verbracht, wobei dieser Riegel 31 in die Ausnehmung 40 eingreift und damit das Abziehen der Riegelfalle 38 vom Behälterdeckel 22 verhindert wird. Dieser zweite Riegel 36 ist dabei nur von der Behälterinnenseite her zugänglich, d.h. es kann nur vom Behälterinnenraum 21 aus bedient werden.

Selbstverständlich kann die Riegelfalle 38 anders ausgebildet sein, wobei jedenfalls zu verhindern ist, dass diese durch die entsprechende Ausnehmung im Behälterdeckel 22 in den Behälterinnenraum 21 fällt.

Weiters ist es möglich, dass die Riegelfalle 38 direkt an der Unterseite 30 des Behälterdeckels 22 angeformt ist, wodurch der Durchbruch im Behälterdeckel 22 entfällt.

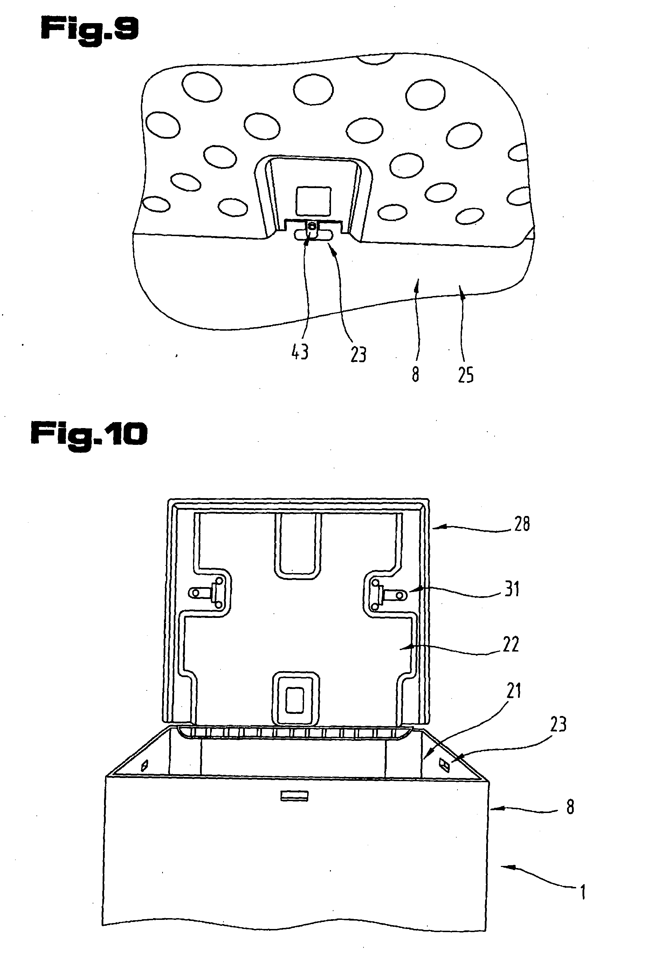

Die beiden Deckelteile 27, 28 können mit beliebigen Mitteln miteinander verbunden sein, die das Verschwenken eines Deckelteils 27, 28, insbesondere des kleineren Deckelteils 28, relativ zum zweiten Deckelteil 27 ermöglichen, um damit das Einwerfen von Altstoffen in den Behälterinnenraum 21 des Altstoffsammelbehälters 1 zu ermöglichen, wie dies aus Fig. 10 ersichtlich ist, welche die aufgeschwenkte Stellung des Deckelteils 28 darstellt. Insbesondere ist aus dieser Darstellung auch die Doppelwandigkeit des Behälterdeckels 22 ersichtlich, mit Verstärkungsstegen zwischen den beiden Wandteilen des Behälterdeckels 22.

Es ist weiters aus dieser Figur ersichtlich, dass auch am kleineren Deckelteil 28 Riegel 31, insbesondere zwei, vorgesehen sein können, die in entsprechende Ausnehmungen 23 des Behältermantels 8 in Eingriff bringbar sind. Es wird damit eine höhere Stabilität des geschlossenen Behälterdeckels 22 für den Versand des vollen Altstoffsammelbehälters 1 erreicht. Diese beiden Verriegelungseinrichtungen 29 sind dabei nicht wie die beiden anderen Verriegelungseinrichtungen 29 gesichert.

Die Verbindung zwischen den beiden Deckelteilen 27, 28 erfolgt bei der Ausführungsvariante nach den Fig. 6 bis 10 über Scharniergelenke 41, wie dies aus Fig. 7 ersichtlich ist. Insbesondere sind dabei vier Scharniergelenke 41 angeordnet, es kann jedoch auch eine zumindest annähernd durchgehende Scharnierleiste als Verbindung zwischen den beiden Deckelteilen 27, 28 verwendet werden bzw. kann diese Verbindung auch in Art eines Filmscharniers ausgebildet sein.

Insbesondere im kleineren Deckelteil 28 des Behälterdeckels 22 ist weiters zur Versperrung des Altstoffsammelbehälters 1 eine Sperrvorrichtung 42 vorgesehen, wobei diese bevorzugt als Zylinderschloss ausgebildet ist, mit einem Drehriegel 43, der an jener Seite des Zylinderschlosses angeordnet ist, welche dem Behälterinnenraum 21 zugewandt ist. Dieser Drehriegel 43 wird in der verschlossenen Stellung in Eingriff mit einer Ausnehmung 23 in der Breitseite 25 des Behältermantels 8 zur Versperrung gebracht, wie dies insbesondere aus Fig. 9 ersichtlich ist.

Anstelle eine Drehriegels kann aber bspw. auch ein Schieberiegel verwendet, im Zusammenhang mit dem Zylinderschloss.

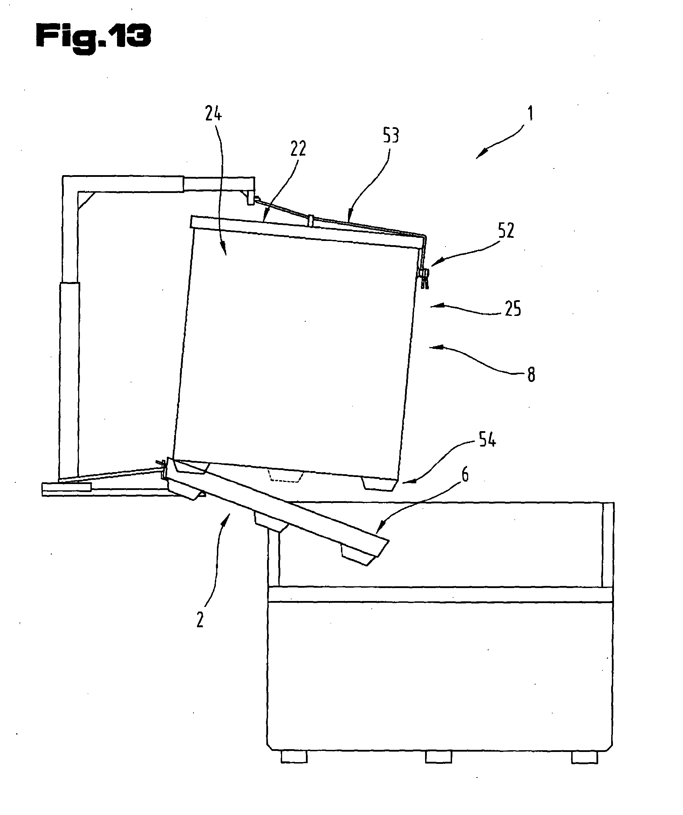

Die Fig. 12 und 13 zeigen schließlich eine Entleervorrichtung 44 für den Altstoffsammelbehälter 1. Diese Entleervorrichtung 44 weist einen Boden 45 auf, der als Aufstandsfläche für den Altstoffsammelbehälter 1 dient. Bevorzugt wird dieser Boden 45 durch Profilelemente gebildete, welche auf die Gabeln eines Gabelstaplers aufgesetzt werden können, wobei diese Profilelemente einen C-förmigen Querschnitt aufweisen können oder als Hohlprofile mit zumindest annähernd rechteckigen Querschnitt ausgebildet sein können. Insbesondere weisen diese Profilelemente eine Breite auf, die einerseits das Aufschieben auf die Gabeln eines Gabelstaplers ermöglichen und andererseits auch ermöglichen, in die unterhalb des Behälterbodens 22 ausgebildeten Zwischenräume verbracht werden zu können und damit den Transport des Altstoffsammelbehälters 1, insbesondere das Aufheben desselben um die Entleerung zu vereinfachen, zu ermöglichen.

An diesem Boden 45 ist eine Vertikalstrebe 46 angeordnet und mit diesem Boden 45 verbunden, wobei die Verbindung der Profilelemente miteinander im Falle der letztgenannten Ausführungsvariante der Entleervorrichtung 44 über eine Querstrebe erfolgen kann, die sowohl mit den Profilelementen als auch mit der Vertikalstrebe 46 verbunden ist.

Am oberen Ende, dem Boden 45 gegenüberliegend ist an der Vertikalstrebe 46 eine Horizontalstrebe 47 vorgesehen und mit dieser verbunden.

Die Vertikalstrebe 46 ist bevorzugt höhenverstellbar, kann also bspw. aus zumindest zwei ineinander verschiebbaren Teilen bestehen, die in einer bestimmten Höhe relativ zueinander fixiert werden können, bspw. über entsprechende Klemmvorrichtungen wie z.B. Schrauben, wie dies in Fig. 12 dargestellt ist, die gegebenenfalls in im oberen Teil vorgesehene Bohrungen eingreifen können.

Zur Halterung des Altstotfsammelbehätters 1 weist diese Entleervorrichtung 44 eine erste untere Halteeinrichtung 48 sowie eine zweite oberer Halteinrichtung 49 auf.

Die erste untere Halteeinrichtung 48 wird bevorzugt durch eine Zwinge 50 gebildet, wobei im Falle der Ausführungsvariante nach Fig. 12 diese Zwinge 50 als Schraubzwinge ausgebildet ist. Bevorzugt werden zwei Zwingen 50 angeordnet, die in den Eckbereichen einer Breitseite 25 des Behältermantels 8 dieses Altstoffsammelbehälters 1 im Bereich des Behälterbodens 2 befestigt werden. Durch die Ausbildung als Zwingen 50 ist eine einfache Montage und Demontage möglich.

Bevorzugt sind diese Zwingen 50 mit einem Gurt 51 verbunden, der hinter der Vertikalstrebe 46 - im Bezug auf die Breitseite 25 - geführt wird, um damit das Abrutschen des Altstoffsammelbehälters 1 von der Entleervorrichtung 44 im Entleerzustand zu verhindern.

Anstelle des Gurtes 51 können auch andere Zurrmittel oder dgl. verwendet werden, wie z.B. Ketten.

Des Weiteren ist es zusätzlich oder anstelle der Zwingen 50 möglich, dass am Altstoffsammelbehälter 1, bspw. am Behälterboden 2, entsprechende Vorkehrungen vorgesehen sind, bspw. Ösen oder dgl., in die zumindest annähernd hackenförmige Elemente eingreifen, um das Anhängen des Altstoffsammelbehälters 1 zu erreichen.

Die zweite obere Halteeinrichtung 49 wird bevorzugt durch Saugnäpfe, insbesondere Vakuumsaugnäpfe 52, gebildet, wie dies insbesondere aus Fig. 13 ersichtlich ist. Auch diese Saugnäpfe 52 sind relativ variabel am Altstoffsammelbehälter 1 anordenbar und werden insbesondere an jener Breitseitenwand 25 angeordnet, welche der ersten vorab beschriebenen Breitseitenwand 25 gegenüberliegend am Behältermantel 8 ausgebildet ist, wobei die erste Breitseitenwand 25 benachbart zur Vertikalstrebe 46 in der Entleervorrichtung 44 situiert ist.

Auch diese Saugnäpfe 52 sind mit einem Gurt 53 verbunden, der im vorderen Endbereich der Horizontalstrebe 47 der Entleervorrichtung 44 gehaltert ist.

Prinzipiell ist auch eine Anordnung dieser Saugnäpfe 52 am Behälterdeckel 22 möglich, allerdings bewirkt die Anordnung derselben an einer der Seitenwände des Behältermantels 8 eine Entlastung des Behälterdeckels 22 während der Entleerung.

Auch hier ist es wiederum möglich, anstelle des Gurtes 53 andere Zurrmittel oder Ketten oder dgl. zu verwenden, und können auch anstelle der Saugnäpfe andere Einrichtungen am Behältermantel 8 vorgesehen sein, bspw. wiederum Ösen oder dgl., in die Hakenelemente eingreifen können.

In der Entleerstellung wird das Altmaterial im Behälterinnenraum 22 in einen weiteren, größeren Behälter verbracht. Dazu wird der Altstoffsammelbehälter 1 mit Hilfe eines Gabelstaplers bzw. generell eines Hubmittels auf die entsprechende Höhe gebracht, sodass sich der Altstoffsammelbehälter 1 zumindest teilweise über dem größeren Transportgebinde, bspw. einer großen Schütte oder einer LKW-Ladefläche oder dgl. befindet.

Für die Entleerung wird der Behälterboden 2 entriegelt, wozu vorerst das gegebenenfalls vorhandene Sicherungselement 19 aus dem Behälterinnenraum, d.h. aus der Eingriffstellung mit der Verriegelungseinrichtung 11 gebracht wird. Danach wird der Altstoffsammelbehälter 1 angehoben und werden die Gabeln des Gabelstaplers nach hinten herausgezogen, bis die beiden Gurte 51, 53 gespannt sind, sodass das weitere Herausziehen der Gabel, das teilweise Abkippen des Behälterbodens 2 vom Behältermantel 8 unter Ausbildung eines Auslaufwinkels zwischen Behälterboden 2 und Behältermantel 8 bzw. das Anheben des Behältermantels 8 bewirkt und damit die Öffnung zur Entleerung des Altstoffsammelbehälters 1 freigegeben wird, wie dies aus Fig. 13 ersichtlich ist. Mit der erfindungsgemäßen Entleervorrichtung ist es dabei möglich, die Größe des Auslaufwinkels zu variieren.

Danach steht dieser Altstoffsammelbehälter 1 zur Wiederbefüllung zur Verfügung bzw. kann dieser in seine Einzelteile zerlegt werden, um für den weiteren Gebrauch wieder an die entsprechenden Sammelstellen transportiert zu werden.

In Fig. 13 ist zudem eine Ausführungsvariante des Altstoffsammelbehälters dargestellt, bei der der Behältermantel 8 an seinen, dem Behälterboden 2 zugewandten Stirnflächen zumindest annähernd trapezförmige Fortsätze 54 aufweist. Es sind dabei pro Längsseite 24 zumindest jeweils zwei dieser Fortsätze 54 in den Eckbereichen des Behältermantels 8 angeordnet; wobei - wie dies strichliert dargestellt ist - auch einem mittleren Bereich zwischen diesen beiden Fortsätzen eine weiterer Fortsatz angeordnet sein kann. Auch die Breitseiten 25 können gegebenenfalls mit jeweils zumindest einem dieser Fortsätze 54 ausgerüstet sein.

Selbstverständlich können auch mehr als zwei bzw. einem der Fortsätze 54 angeordnet werden.

Diese Fortsätze 54 sind dabei so positioniert, dass sie in die Vertiefungen 6 des Behälterbodens 2 eingreifen, wodurch der Altstoffsammelbehälter 1 eine größere Stabilität erhält. Darüber hinaus wird damit aber auch erreicht, dass auch bei größeren Auslaufwinkel zwischen dem Behälterboden 2 und dem Behältermantel 8 zur Entleerung des Altstoffsammelbehälters 1 - wie dies in Fig. 13 dargestellt ist - sich der Behältermantel 8 während der Entleerung durch den Eingriff nicht zur Gänze vom Behälterboden 2 löst, also damit auch eine höhere Stabilität während der Entleerung erreicht wird.

Angemerkt sei weiters, dass - nachdem der Altstoffsammelbehälter 1 für Schüttgüter allgemein verwendet werden kann - für Schüttgüter, die keiner Datensicherheit bedürfen, der Altstoffsammelbehälter nicht unbedingt verschließbar bzw. mit einer Sicherung der Verriegelung ausgebildet werden muss. Wesentlich ist in diesem Fall die Entleervorrichtung 44, die die Schüttgutfähigkeit des Behälters - in Hinblick auf die Transportlogistik - durch den einfachen und kostengünstigen Aufbau der Entleervorrichtung 44 verbessert, bzw. das Zusammenspiel zwischen dem Altstoffsammelbehälter 1 und der Entleervorrichtung 44.

Die Ausführungsbeispiele zeigen mögliche Ausführungsvarianten des Altstoffsammelbehälters 1 und der Entleervorrichtung 44, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Der Ordnung halber sei abschließend daraufhingewiesen, dass zum besseren Verständnis des Aufbaus des Altstoffsammelbehälters 1 und der Entleervorrichtung 44 diese bzw. deren Bestandteile teilweise unmaßstäblich und/oder vergrößert und/oder verkleinert dargestellt wurden.

Die den eigenständigen erfinderischen Lösungen zugrunde liegende Aufgabe kann der Beschreibung entnommen werden.

Vor allem können die einzelnen in den Fig. 1, 2, 3, 4, 5, 6, 7, 8, 9, 10, 11; 12, 13 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Altstoffsammelbehälter
- 2: Behälterboden
- 3: Unterseite
- 4: Vorsprung
- 5: Oberseite
- 6: Vertiefung
- 7: Rille
- 8: Behältermantel
- 9: Seitenwand
- 10: Ausnehmung
- 11: Verriegelungseinrichtung
- 12: Längsseite
- 13: Breitseite
- 14: Riegel
- 15: Abdeckplatte
- 16: Steg
- 17: Ausnehmung
- 18: Gestänge
- 19: Sicherungselement
- 20: Ausnehmung
- 21: Behälterinnenraum
- 22: Behälterdeckel
- 23: Ausnehmung
- 24: Längsseite
- 25: Breitseite
- 26: Rilllinie
- 27: Deckelteil
- 28: Deckelteil
- 29: Verriegelungseinrichtung
- 30: Unterseite
- 31: Riegel
- 32: Oberseite
- 33: Fortsatz
- 34: Rille
- 35: Seitenwand

- 36: Riegel
- 37: Halteplatte
- 38: Riegelfalle
- 39: Sicherungselement
- 40: Ausnehmung
- 41: Scharniergelenk
- 42: Sperrvorrichtung
- 43: Drehriegel
- 44: Entleervorrichtung
- 45: Boden
- 46: Vertikalstrebe
- 47: Horizontalstrebe
- 48: Halteeinrichtung
- 49: Halteeinrichtung
- 50: Zwinge
- 51: Gurt
- 52: Saugnapf
- 53: Gurt
- 54: Fortsatz

## Patentansprüche

1. Altstoffsammelbehälter (1), insbesondere für Datenträger, wie z.B. Papier, mit einem Behälterboden (2), einem faltbaren Behältermantel (8) und einem Behälterdeckel (22), die einen Behälterinnenraum (21 definieren, wobei der Behältermantel (8) trennbar mit Behälterboden (2) und dem Behälterdeckel (22) verbunden und über jeweils zumindest eine Verriegelungseinrichtung (11, 29) verriegelbar ist, **dadurch gekennzeichnet, dass** zumindest die Verriegelungseinrichtung (11) zur Verriegelung des Behälterbodens (2) mit dem Behältermantel (8) ein Sicherungselement (19) aufweist, das ausschließlich im Behälterinnenraum (21) betätigbar ist und dass der Behälterdeckel (22) mit dem Behältermantel (8) mit einer Sperrvorrichtung (42) versperrbar ausgebildet ist.

2. Altstorfsammelbehälter (1) nach Anspruch 1, **dadurch gekennzeichnet, dass** eine Verriegelungseinrichtung (11) für die Verriegelung des Behälterbodens (2) mit dem Behältermantel (8) durch einen horizontal verschiebbaren Riegel (14) gebildet ist, der in der verriegelten Stellung in eine dazu korrespondierende Ausnehmung (20) in einer Seitenwand des Behältermantels (8) eingreift, wobei der Riegel (14) eine, insbesondere durch-gehende, Ausnehmung (17) aufweist und das zugehörige Sicherungselement (19) durch ein Gestänge (18) gebildet ist, das in der Sicherungsstellung in die Ausnehmung (17) des Riegels (14) eingreift bzw. durch diese hindurchragt.

3. Altstoffsammelbehälter (1) nach Anspruch 2, **dadurch gekennzeichnet, dass** der Riegel (14) zumindest so lange ist, dass er durch zwei einander gegenüberliegende Ausnehmungen (23) in zwei Seitenwänden des Behältermantels (8) hindurchragt und zwei Ausnehmungen (17) aufweist.

4. Altstoffsammelbehälter (1) nach Anspruch 2, **dadurch gekennzeichnet, dass** für die Verriegelung des Behälterbodens (2) mit dem Behältermantel (8) je eine Verriegelungsvorrichtung (11) zumindest für zwei einander gegenüberliegende Seitenwände des Behältermantels (8) angeordnet sind.

5. Altstoffsammelbehälter (1) nach Anspruch 4, **dadurch gekennzeichnet, dass** die beiden Verriegelungsvorrichtungen (11) schräg versetzt zueinander angeordnet sind.

6. Altstoffsammelbehälter (1) nach einem der Ansprüche 2 bis 5, **dadurch gekennzeichnet, dass** das bzw. die Gestänge (18) mit den jeweilig zugehörigen Seitenwänden des Behältermantels (8) über eine Verbindungseinrichtung verbindbar sind.

7. Altstoffsammelbehälter (1) nach Anspruch 6, **dadurch gekennzeichnet, dass** die Verbindungseinrichtung durch einen Klettverschluss gebildet ist.

8. Altstoffsammelbehälter (1) nach einem der Ansprüche 2 bis 7, **dadurch gekennzeichnet, dass** an dem bzw. an den Gestänge(n) (18) im Bereich des Eingriffs mit dem(den) Riegel(n) (14) je zumindest ein Begrenzungselement angeordnet ist, das die vertikale Verschiebbarkeit des Gestänges (18) bzw. der Gestänge (18) begrenzt.

9. Altstoffsammelbehälter (1) nach einem der Ansprüche 2 bis 7, **dadurch gekennzeichnet, dass** das oder die Gestänge (18) eine Länge in vertikaler Richtung aufweist bzw. aufweisen, die zumindest annähernd so groß ist wie eine Höhe des Behältermantels (8) in dieser Richtung.

10. Altstoffsammelbehälter (1) nach Anspruch 1, **dadurch gekennzeichnet, dass** das bzw. die Gestänge (18) am Behälterdeckel (22) angeordnet ist bzw. sind.

11. Altstoffsammelbehälter (1) nach Anspruch 10, **dadurch gekennzeichnet, dass** das bzw. die Gestänge (18) verschenkbar am Behälterdeckel (22) angeordnet sind.

12. Altstoffsammelbehälter (1) nach einem der Ansprüche 2 bis 11, **dadurch gekennzeichnet, dass** das bzw. die Gestänge (18) faltbar ausgebildet sind.

13. Altstoffsammelbehälter (1) nach einem der vorhergehenden Ansprüche, **dadurch gekennzeichnet, dass** eine Verriegelungseinrichtung (29) für die Verriegelung des Behälterdeckels (22) mit dem Behältermantel (8) durch einen ersten horizontal verschiebbaren Riegel (31) gebildet ist, der in der verriegelten Stellung in eine dazu korrespondierende Ausnehmung (23) in einer Seitenwänden des Behältermantels (8) eingreift, und das Sicherungselement (39) durch einen zweiten horizontal verschiebbaren, am ersten Riegel (31) angeordneten Riegel (36) sowie durch eine Riegelfalle (38) mit einer Ausnehmung (40) gebildet ist, in die der zweite Riegel (36) in der Verriegelungsstellung eingreift.

14. Altstoffsammelbehälter (1) nach Anspruch 13, **dadurch gekennzeichnet, dass** die Riegelfalle (38) durch ein zumindest annähernd T-förmiges Profilstück gebildet ist, das in eine Ausnehmung des Behälterdeckels (22) und diese teilweise durchdringend einsteckbar ist.

15. Altstoffsammelbehälter (1) nach Anspruch 13, **dadurch gekennzeichnet, dass** die Riegelfalle (38) an einer inneren, auf den Behälterinnenraum (21) weisenden Oberfläche des Behälterdeckels (22) angeformt ist.

16. Altstoffsammelbehälter (1) nach einem der vorhergehenden Ansprüche, **dadurch gekennzeichnet, dass** der Behälterdeckel (22) zumindest zweigeteilt ist, wobei die beiden Teile verschwenkbar miteinander verbunden sind.

17. Altstoffsammelbehälter (1) nach einem der vorhergehenden Ansprüche, **dadurch gekennzeichnet, dass** die Sperrvorrichtung (42) durch eine Zylinderschloss mit einem Drehriegel (43) oder Schieberiegel, der an einem Ende des Zylinderschlosses angeordnet ist, welches in Richtung auf den Behälterinnenraum (21) weist, gebildet ist, und der Drehriegel (43) oder Schieberiegel mit einer Ausnehmung (23) in einer Seitenwand des Behältermantels (8) zusammenwirkt.

18. Altstoffsammelbehälter (1) nach einem der vorhergehenden Ansprüche, **dadurch gekennzeichnet, dass** zumindest zwei Seitenwände des Behältermantels (8) Rilllinien (26) aufweisen, wobei diese Rilllinien (26) außermittig im Bezug auf die jeweilige Seitenwand angeordnet sind.

19. Altstoffsammelbehälter (1) nach einem der vorhergehenden Ansprüche, **dadurch gekennzeichnet, dass** der Behälterboden (2) und/oder der Behälterdeckel (22) Seitenwände aufweist (aufweisen), die - in vertikaler Richtung betrachtet - die Ausnehmungen (20, 23) in den Seitenwänden des Behältermantels (8) überdecken.

20. Entleervorrichtung (44) für einen Altstoffsammelbehälter (1), insbesondere für Datenträger, wie z.B. Papier, mit einem Behälterboden (2), einem Behältermantel (8) und einem Behälterdeckel (22), die einen Behälterinnenraum (21) definieren, wobei der Behältermantel (8) trennbar mit dem Behälterboden (2) und dem Behälterdeckel (22) verbunden und über jeweils zumindest eine Verriegelungseinrichtung (11, 29) verriegelbar ist, insbesondere für einen Altstoffsammelbehälter (1) nach einem der vorhergehenden Ansprüche, **dadurch gekennzeichnet, dass** diese zumindest einen Boden (45), der eine Aufstandsfläche für den Altstoffsammelbehälter (1) bildet, zumindest eine mit dem Boden (45) verbundene, insbesondere höhenverstellbare, Vertikalstrebe (46) und zumindest eine mit der Vertikalstrebe (46) verbundene Horizontalstrebe (47) aufweist, wobei an der Horizontalstrebe (47) zumindest eine erste Halteeinrichtung (48) angeordnet ist, die mit einer Seitenwand des Behältermantels (8) oder dem Behälterdeckel (22) des Altstoffsammelbehälters (1) verbindbar ist, und an dem Boden (45) oder der Vertikalstrebe (46) zumindest eine zweite Halteeinrichtung (49) angeordnet ist, die mit dem Behälterboden (2) und/oder einer der ersten Seitenwand gegenüberliegenden Seitenwand des Behältermantels (8) verbindbar ist.

21. Entleervorrichtung (44) nach Anspruch 20, **dadurch gekennzeichnet, dass** die erste Halteeinrichtung (48) zumindest einen Saugnapf (52) aufweist.

22. Entleervorrichtung (44) nach Anspruch 20 oder 21, **dadurch gekennzeichnet, dass** die zweite Halteeinrichtung (49) zumindest eine breitenverstellbare Zwinge (50) aufweist.

23. Entleervorrichtung (44) nach einem der Ansprüche 20 bis 22, **dadurch gekennzeichnet, dass** der Boden (45) durch zwei Formträger, insbesondere mit C-förmigem Profilquerschnitt, gebildet ist.

24. Entleervorrichtung (44) nach Anspruch 23, **dadurch gekennzeichnet, dass** die Formträger auf Gabeln eines Gabelstaplers aufgeschoben werden können.
